# EUROPÄISCHE PATENTSCHRIFT

(11) **EP 1 377 422 B1**
(45) Veröffentlichungstag und Bekanntmachung des Hinweises auf die Patenterteilung: **09.02.2005**
(21) Anmeldenummer: 02737756.3
(22) Anmeldetag: 27.03.2002
(51) Int. Cl.: B29C 39/02, B29C 39/10, B29C 70/70

(54) **VERFAHREN UND VORRICHTUNG ZUR HERSTELLUNG EINES ELEKTRISCHEN KUNSTSTOFFISOLATORS**
METHOD AND DEVICE FOR PRODUCING AN ELECTRIC INSULATOR MADE FROM PLASTIC
PROCEDE ET DISPOSITIF POUR PRODUIRE UN ISOLATEUR ELECTRIQUE EN MATIERE PLASTIQUE

(30) Priorität: 08.04.2001 DE 10117551; 30.04.2001 DE 10121236
(43) Veröffentlichungstag der Anmeldung: 07.01.2004
(73) Patentinhaber: Trench Germany GmbH, 96050 Bamberg (DE)
(72) Erfinder: JANSSEN, Harald, 96050 Bamberg (DE); HENNINGS, Raimund, 96175 Pettstadt (DE)
(74) Vertreter: Hufnagel, Walter, Dipl.-Ing., Dipl.-Wirtsch.-Ing.
(86) Internationale Anmeldenummer: PCT/DE2002/001127
(87) Internationale Veröffentlichungsnummer: WO 2002/081167

(56) Entgegenhaltungen:
- WO-A-99/08290
- DE-A- 2 425 076
- DE-A- 2 657 051

## Beschreibung

Die Erfindung bezieht sich auf ein Verfahren und eine Vorrichtung zur Herstellung eines elektrischen Kunst-stoffisolators, der einen zentral angeordneten Kern bzw. Hohlkern, insbesondere aus glasfaserverstärktem Kunststoff aufweist, sowie eine Vielzahl koaxial um den Kern bzw. Hohlltern herum angeordnete Isolationsschirme, die in axialer Richtung des Kerns bzw. Hohlkerns versetzt angeordnet sind.

Ein Verfahren, sowie eine zugehörige Vorrichtung zur Herstellung eines solchen Kunststoffisolators sind aus der DE-AS 2044179 bekannt. Eine oben offene Gießform wird dort um einen zentral angeordneten und vertikal positionierten Kern koaxial angeordnet. Die Gießform wird dann durch Eingießen von flüssiger Silikonmasse befüllt. Die Form hat dabei hinsichtlich ihrer Kavität die Kontur, die dem gewünschten Isolationsschirm entspricht. Nach dem Aushärten der Silikonmasse wird die Gießform axial nach unten verfahren und zwar um den Betrag, der dem gewünschten axialen Abstand zweier Isolationsschirme entspricht. Auf diese Art und Weise werden die einzelnen Isolationsschirme gegossen.

Bei dem vorbekannten Verfahren wurde es als nachteilig erkannt, dass die Silikonmasse, aus der die Isolationsschirme gegossen werden, eine relativ geringe Viskosität aufweisen muß, insbesondere gleich oder kleiner als 25 000 [mPa*s]. Damit sich eine isolationsmäßig günstige Oberfläche der Isolationsschirme ergibt, ist es nur sehr bedingt möglich, der Silikonmasse Füllmaterialien zuzugeben. Dies verteuert die Materialkosten des Isolators erheblich.

Der Erfindung liegt daher die **Aufgabe** zugrunde, ein Verfahren und eine zugehörige Vorrichtung der eingangs genannten Art so fortzubilden, dass es möglich ist, auch preiswertere Kunststoffmaterialien, insbesondere Silikonmaterial, mit höherer Viskosität zu verarbeiten und trotzdem sicherzustellen, dass die gegossenen Isolationsschirme qualitativ hochwertig sind. Weiterhin soll mit dem erfindungsgemäßen Verfahren eine kürzere Produktionszeit bei der Herstellung eines Isolators realisiert werden.

So wird angestrebt, die mittlere Formfüllzeit um 60 % bis 80 % gegenüber bekannten Verfahren zu reduzieren.

Die **Lösung** dieser Aufgabe durch die Erfindung ist verfahrensgemäß durch folgende Schritte definiert:
a) Zunächst wird die Gießform für das Gießen der Isolationsschirme an einer vorgegebenen axialen Position des vertikal angeordneten Kerns bzw. Hohlkerns positioniert. Dabei umschließt die Gießform den Kern bzw. Hohlkern mit einer koaxialen Öffnung, die in einem axial unten liegenden Bereich der Gießform angeordnet ist; die Gießform hat weiterhin einen oben offenen Formbereich zur Ausbildung eines Isolationsschirms.
b) Anschließend wird ein Dichtverbund zwischen Kern bzw. Hohlkern einerseits und Gießform andererseits in einem axial unten liegenden Bereich der Gießform hergestellt. Dies erfolgt beispielsweise durch Aktivieren einer Dichtung.
c) Dann wird flüssiges Kunststoffmaterial mit gegenüber dem Umgebungsdruck erhöhtem Druck in einem axialen Bereich der Gießform eingespritzt, der axial oberhalb des Dichtverbundes und axial unterhalb des oberen Endes der Gießform liegt. Dies erfolgt, bis die Gießform mit einem vorgegebenen Volumen des Kunststoffmaterials gefüllt ist.
d) Anschließend lässt man das Kunststoffmaterial in der Gießform aushärten.
e) Nach dem Aushärten wird der Dichtverbund zwischen dem Kern bzw. Hohlkern und der Gießform wieder aufgehoben. Insbesondere wird eine Dichtung in der Gießform deaktiviert.
f) Sodann wird die Gießform relativ zum Kern bzw. Hohlkern axial nach unten um einen vorgegebenen Verschiebeweg verschoben, der dem axialen Abstand der Isolationsschirme entspricht.
g) Die Schritte b) bis f) werden solange wiederholt, bis die gewünschte Anzahl an Isolationsschirmen hergestellt ist.

Gemäß einer Weiterbildung erfolgt die Einspritzung des Kunststoffmaterials mit einem Einspritzdruck, der mindestens dem 5-fachen des Umgebungsdrucks entspricht. Die Gießform wird bevorzugt zumindest während des Schrittes des Aushärtens temperiert, insbesondere erwärmt. Diese Erwärmung erfolgt insbesondere beim Einsatz von Silikon als Kunststoffmaterial auf mindestens 60 °C.

Die Vorrichtung zur Herstellung des elektrischen Kunsestoffisolators zeichnet sich erfindungsgemäß dadurch aus, dass zwischen dem unten liegenden Ende des axial unten liegenden Bereichs und dem oberen Ende der Gießform mindestens ein Einspritzelement bzw. Einspritzkanal zur Druckeinspritzung von flüssigem Kunststoffmaterial angeordnet ist.

Das Einspritzelement bzw. der Einspritzkanal ist dabei bevorzugt in einem axialen Bereich der Gießform angeordnet, in dem der Kern bzw. Hohlkern in einer koaxialen Öffnung der Gießform eng an der Gießform anliegt. Die Wirtschaftlichkeit der Herstellung kann dadurch weiter verbessert werden, dass mehrere Einspritzelemente bzw. Einspritzkanäle, vorzugsweise vier, sechs oder acht, gleichmäßig verteilt über den Umfang der Gießform angeordnet sind.

Eine Dichtung zur Abdichtung der Gießform gegen den Kern bzw. Hohlkern ist bevorzugt unterhalb der axialen Position der Einspritzelemente bzw. der Einspritzkanäle angeordnet. Die Dichtung ist mit Vorteil steuerbar aktivierbar bzw. deaktivierbar, wobei insbesondere an eine pneumatische oder hydraulische Betätigung gedacht ist. Schließlich können im oben offenen Formbereich der Gießform Temperierelemente, insbesondere Heizelemente, angeordnet sein.

Der Kerngedanke des neuartigen Verfahrens stellt darauf ab, dass die Herstellung eines Isolationsschirms mittels einer Gießform so erfolgt, dass das Kunststoffmaterial, insbesondere das Silikonmaterial, unter erhöhtem Druck von unten in die oben offene Gießform eingebracht wird. In Abkehr von dem vorbekannten Verfahren wird also das flüssige Kunststoffmaterial nicht mehr von oben unter Umgebungsdruck in die offene Gießform eingegossen.

Damit ergeben sich wesentliche Vorteile:
- Zunächst kann auf preiswerteres Ausgangsmaterial zurückgegriffen werden. Dem Gieß- bzw. Silikonmaterial können Füllstoffe in größerem Umfange zugegeben werden, die die Materialkosten insgesamt senken.
- Weiterhin ist es möglich, flüssiges Kunststoffmaterial mit höherer Viskosität zu verarbeiten, ohne die Qualität der Oberfläche der Isolationsschirme herabzusetzen. Durch den Druckverguß ist es möglich, Kunststoffmassen zu verarbeiten, deren Viskosität deutlich über 25000 [mPa*s] liegt, zumindest bis hin zu 85000 [mPa*s]. Bislang mußte das zum Einsatz kommende Gieß- bzw. Silikonmaterial sehr dünnflüssig sein, um hochqualitative Isolationsschirme herstellen zu können.
- Damit ergibt sich auch die Möglichkeit, Gieß- bzw. Silikonmaterial mit kürzerer Aushärtungszeit einzusetzen, was die Produktionszeit für einen Kunststoffisolator verkürzt und entsprechend die Wirtschaftlichkeit des Verfahrens erhöht.
- Mit dem vorgeschlagenen Verfahren können nahtlose Isolationsschirme ohne jegliche Gußnaht hergestellt werden, wobei das Gieß- bzw. Silikonmaterial direkt auf den zentralen Kern aufgebracht wird.

In der Zeichnung ist ein Ausführungsbeispiel der Erfindung dargestellt.
- Fig. 1: zeigt schematisch den Schnitt durch einen Kunststoffisolator,
- Fig. 2: stellt eine Gießvorrichtung im Schnitt dar, wobei deren Dichtung nicht aktiviert ist,
- Fig. 3: zeigt dieselbe Darstellung, wie Fig. 2, jedoch mit aktivierter Dichtung.

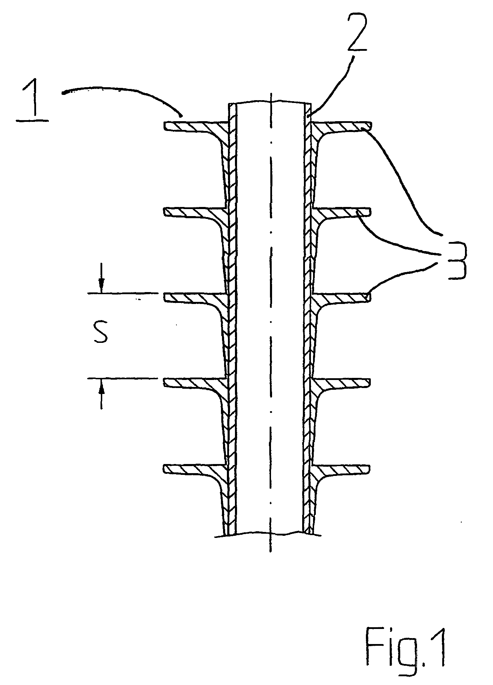

In Fig. 1 ist ein elektrischer Kunststoffisolator 1 zu sehen. Er besteht aus einem zentral angeordneten Hohlkern 2, um den herum koaxial Isolationsschirme 3 angeordnet sind. Die Schirme 3 sind dabei jeweils in konstantem Abstand s zueinander angeordnet, der dem axialen Verschiebeweg der nachfolgend beschriebenen Gießform 4 entspricht.

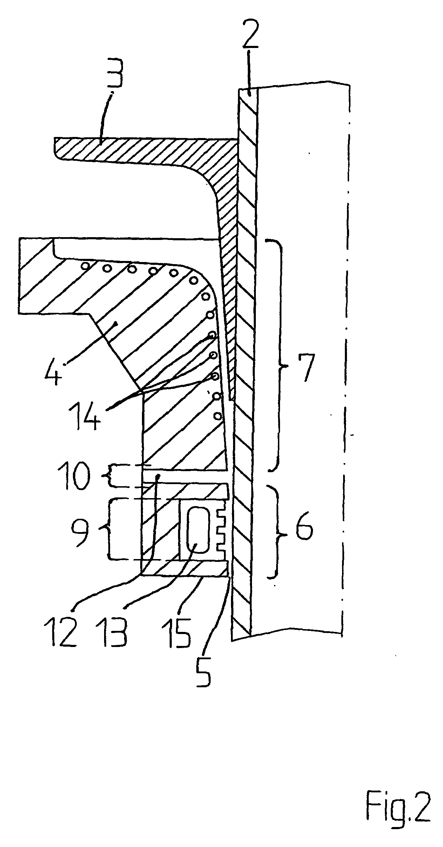

In Fig. 2 ist wieder der zentral angeordnete Hohlkern 2 des Kunststoffisolators 1 zu sehen, dessen Achse vertikal positioniert ist. Zur Herstellung der einzelnen Isolationsschirme 3 wird die Gießform 4 eingesetzt. Die Gießform weist eine koaxiale Öffnung 5 auf, die den Hohlkern 2 umgreift.

Die Gießform 4 hat einen axial unten liegenden Bereich 6, der sich im wesentlichen mit der koaxialen Öffnung 5 der Gießform 4 eng um den Hohlkern 2 anlegt. Oberhalb des unteren Bereichs 6 erstreckt sich axial ein oben offener Formbereich 7 der Gießform 4. Dieser Formbereich 7 weist die eigentliche Kavität der Gießform 4 auf, die die Form des zu gießenden Isolationsschirms 3 definiert.

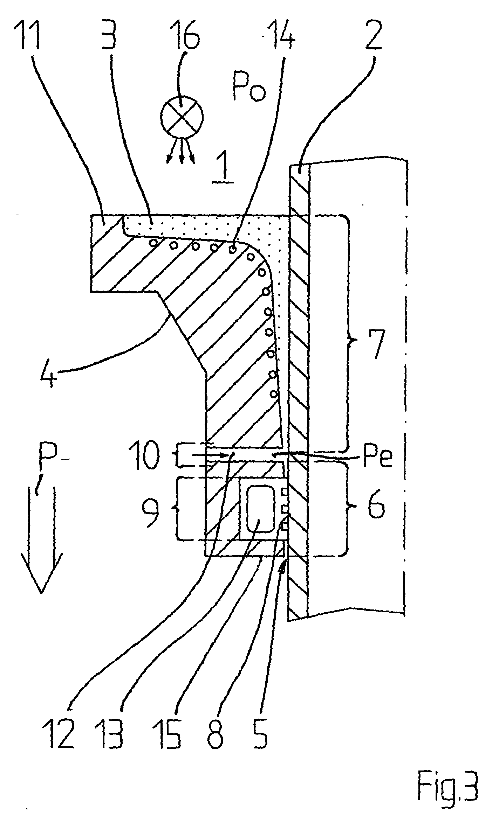

Die Gießform 4 wird mit nicht dargestellten Bewegungselementen bei vertikal angeordnetem Hohlkern 2 abwärts bewegt (siehe Doppelpfeil P in Fig. 3). Nachdem ein Isolationsschirm 3 gefertigt ist, wird die Gießform 4 um den in Fig. 1 dargestellten axialen Verschiebeweg s nach unten bewegt. Während der Bewegung ist - wie in Fig. 2 zu sehen ist - die Dichtung 13 deaktiviert, die vorgesehen ist, um einen festen Dichtverbund 8 (siehe Fig. 3) zwischen Gießform 4 und Hohlkern 2 herzustellen.

Hat die Gießform 4 die gewünschte axiale Position erreicht, wird bevorzugt durch Aufbau eines hydraulischen oder pneumatischen Drucks in der Dichtung 13 diese an den Hohlkern 2 angelegt. Damit ist der Dichtverbund 8 hergestellt, siehe Fig. 3. Der Dichtverbund 8 erstreckt sich dabei über den axialen Bereich 9, der in den Fig. 2 und Fig. 3 zu erkennen ist.

Unmittelbar axial oberhalb des Bereichs 9 des Dichtverbundes 8 ist im axialen Bereich 10 ein Einspritzelement bzw. Einspritzkanal 12 angeordnet. Dieser Bereich 10 liegt noch in demj enigen axialen Bereich der Gießform 4, der sich im wesentlichen eng um den Hohlkern 2 anlegt. Über das Einspritzelement bzw. dem Einspritzkanal 12 wird flüssige Silikonmasse, bevorzugt mit Füllstoffen, in die Gießform 4 eingespritzt. Die Masse kann dabei eine Viskosität zumindest bis zu 85000 [mPa*s] aufweisen, also einen Wert, der erheblich über dem bislang als Grenzwert angesehenen Viskositätswert von 25000 [mPa*s] liegt. Damit können auch sogenannte LSR-Silikone (Liquid Silicon Rubber) eingesetzt werden, was mit dem bisher bekannten Verfahren nicht möglich war.

Das Einspritzen des Silikonmaterials erfolgt dabei mit einem Einspritzdruck pₑ, der erheblich über dem Umgebungsdruck p₀ liegt. Der Einspritzdruck beträgt mindestens das 5-fache des Umgebungsdrucks.

Erfindungswesentlich ist, dass der Bereich der Einspritzstelle (n) 10, d. h. die axiale Stelle, an der das Einspritzelement bzw. der Einspritzkanal 12 angeordnet ist, zwischen dem unteren Ende 15 des unten liegenden Bereichs 6 der Gießform 4 und deren oberen Ende 11 befindet.

Zur Beschleunigung des Aushärtevorganges des Silikonmaterials sind in der Gießform 4 in der Nähe der Kavitätswand Heizelemente 14 angeordnet, die eine Temperatur während des Aushärtens von mindestens 60 °C aufrechterhalten.

Über den Umfang der Gießform 4 ist - was aus den Figuren 1 bis 3 nicht hervorgeht - äquidistant eine Vielzahl von Einspritzelementen bzw. Einspritzkanälen 12 angeordnet. Bevorzugt kommen vier, sechs oder acht Einspritzelemente bzw. Einspritzkanäle 12 zum Einsatz. Die einzelnen Einspritzelemente bzw. Einspritzkanäle 12 können dabei von einer koaxial angeordneten Ringleitung mit Silikonmaterial versorgt werden.

Eine Rotation der Gießform, wie gelegentlich im Stand der Technik bekannt, ist beim erfindungsgemäßen Verfahren nicht nötig. Wegen des Wegfalls der Formrotation kann das Silikon durch die Einspritzelemente bzw. Einspritzkanäle 12 problemlos zugeführt werden. Die elektrische Beheizung der Gießform 4 ist gleichermaßen einfach möglich. Durch die aktivierbare und deaktivierbare Dichtung 13 ist das axiale Bewegen der Gießform 4 problemlos möglich, da während dieser Bewegung die Dichtung 13 nicht aktiviert ist.

Der Zuführweg für das Silikon von dessen Quelle bis zu dem bzw. den Einspritzelement (en) bzw. Einspritzkanal (en) 12 kann gekühlt werden, um dort eine Vulkanisation zu verhindern.

Oberhalb der Gießform 4 kann bzw. können ein oder mehrere zusätzliche(s) Temperaturelement(e) 16 angeordnet sein. Derartige Temperaturelement(e) kann bzw. können insbesondere Infrarotlampe(n) sein.

Anstatt der beschriebenen Isolationsschirme 4 aus Silikonkunststoffen können diese - wie allgemein bekannt - aus anderen, vorzugsweise witterungsbeständigen Kunstharzen bestehen.

### Bezugszeichenliste:

- 1: elektrischer Kunststoffisolator
- 2: Kern bzw. Hohlkern
- 3: Isolationsschirme
- 4: Gießform
- 5: koaxiale Öffnung der Gießform
- 6: axial unten liegender Bereich der Gießform
- 7: oben offener Formbereich der Gießform
- 8: Dichtverbund
- 9: Bereich des Dichtverbundes
- 10: Bereich der Einspritzstelle(n)
- 11: oberes Ende der Gießform
- 12: Einspritzkanal
- 13: Dichtung
- 14: Temperierelemente
- 15: unteres Ende der Gießform
- 16: zusätzliche (s) Temperaturelement (e)

- P: Doppelpfeil
- p₀: Umgebungsdruck
- pₑ: Einspritzdruck
- s: axialer Verschiebeweg

## Patentansprüche

1. Verfahren zur Herstellung eines elektrischen Kunststoffisolators (1) , der einen zentral angeordneten Kern bzw. Hohlkern (2), insbesondere aus glasfaserverstärktem Kunststoff aufweist, sowie eine Vielzahl koaxial um den Kern bzw. Hohlkern (2) herum angeordnete Isolationsschirme (3), die in axialer Richtung des Kerns bzw. Hohlkerns (2) versetzt angeordnet sind, mit den Verfahrensschritten:
a) Positionieren einer Gießform (4) an einer vorgegebenen axialen Position um den vertikal angeordneten Kern bzw. Hohlkern (2), wobei die Gießform (4) eine koaxiale Öffnung (5) , die in einem axial unten liegenden Bereich (6) der Gießform (4) angeordnet ist, sowie einen oben offenen Formbereich (7) zur Ausbildung eines Isolationsschirms (3) hat;
b) Herstellen eines Dichtverbundes (8) zwischen Kern bzw. Hohlkern (2) und Gießform (4) in einem axial unten liegenden Bereich (9) der Gießform (4);
c) Einspritzen eines flüssigen Kunststoffmaterials, insbesondere eines Silikonmaterials, mit gegenüber dem Umgebungsdruck (p₀) erhöhtem Druck (pₑ) in einem axialen Bereich (10) der Gießform (4), der axial oberhalb des Dichtverbundes (8) und axial unterhalb des oberen Endes (11) der Gießform (4) liegt, bis die Gießform (4) mit einem vorgegebenen Volumen des Kunststoffmaterials gefüllt ist;
d) Aushärtenlassen des Kunststoffmaterials in der Gießform (4);
e) Aufheben des Dichtverbundes (8) zwischen dem Kern bzw. Hohlkern (2) und der Gießform (4);
f) axiales Verschieben der Gießform (4) relativ zum Kern bzw. Hohlkern (2) nach unten um einen vorgegebenen Verschiebeweg (s);
g) Wiederholen der Schritte b) bis f), bis die gewünschte Anzahl an Isolationsschirmen (3) hergestellt ist.

2. Verfahren nach Anspruch 1, **dadurch gekennzeichnet, dass** die Einspritzung des Kunststoffmaterials gemäß Schritt c) von Anspruch 1 mit einem Einspritzdruck (pₑ) erfolgt, der mindestens dem 5-fachen des Umgebungsdrucks (p₀) entspricht.

3. Verfahren nach Anspruch 1 oder 2, **dadurch gekennzeichnet, dass** die Gießform (4) zumindest während des Schrittes d) gemäß Anspruch 1 temperiert, insbesondere erwärmt wird.

4. Verfahren nach Anspruch 3, **dadurch gekennzeichnet, dass** beim Einsatz von Silikon als Kunststoffmaterial eine Erwärmung der Gießform (4) auf mindestens 60 °C erfolgt.

5. Vorrichtung zur Herstellung eines elektrischen Kunststoffisolators (1), nach dem Verfahren gemäß einem oder mehreren der Ansprüche 1 bis 4, die eine Gießform (4) zur Herstellung von Isolationsschirmen (3) aufweist, die konzentrisch um einen vertikal positionierten Kern bzw. Hohlkern (2) angeordnet werden kann und die einen axial unten angeordneten Bereich (6) aufweist, der sich um den Kern bzw. Hohlkern (2) anlegt, sowie einen axial oben angeordneten Bereich (7) aufweist, der sich im Verhältnis zum axial unten liegenden Bereich (6) radial erweitert und der Form des herzustellenden Isolationsschirms (3) angepasst ist,
**dadurch gekennzeichnet,**
**dass** zwischen dem unten liegenden Ende (15) des axial unten liegenden Bereichs (6) und dem oberen Ende (11) der Gießform (4) mindestens ein Einspritzkanal (12) zur Druckeinspritzung von flüssigem Kunststoffmaterial angeordnet ist.

6. Vorrichtung nach Anspruch 5, **dadurch gekennzeichnet, dass** der Einspritzkanal (12) in einem axialen Bereich (10) der Gießform (4) angeordnet ist, in dem der Kern bzw. Hohlkern (2) in einer koaxialen Öffnung (5) der Gießform (4) eng an der Gießform (4) anliegt.

7. Vorrichtung nach Anspruch 5 oder 6, **dadurch gekennzeichnet, dass** mehrere Einspritzkanäle (12), vorzugsweise vier, sechs oder acht Einspritzkanäle (12), gleichmäßig verteilt über den Umfang der Gießform (4) angeordnet sind.

8. Vorrichtung nach einem der Ansprüche 5 bis 7, **dadurch gekennzeichnet, dass** unterhalb der axialen Position (10) des Einspritzkanals bzw. der Einspritzkanäle (12) eine Dichtung (13) zur Abdichtung der Gießform (4) gegen den Kern bzw. Hohlkern (2) angeordnet ist.

9. Vorrichtung nach Anspruch 8, **dadurch gekennzeichnet, dass** die Dichtung (13) steuerbar aktivierbar bzw. deaktivierbar ist.

10. Vorrichtung nach Anspruch 9, **dadurch gekennzeichnet, dass** die Dichtung (13) pneumatisch oder hydraulisch aktivierbar, insbesondere aufblasbar, ist.

11. Vorrichtung nach einem der Ansprüche 5 bis 10, **dadurch gekennzeichnet, dass** im oben offenen Formbereich (7) der Gießform (4) Temperierelemente (14), insbesondere Heizelemente, angeordnet sind.

12. Vorrichtung nach einem der Ansprüche 5 bis 11, **dadurch gekennzeichnet, dass** oberhalb der Gießform (4) ein oder mehrere zusätzliche(s) Temperaturelement(e) (16) angeordnet ist bzw. sind.

## Claims

1. Method for production of an electrical insulator (1) which is made of plastic and exhibits a centrally arranged core or hollow core (2), in particular made of glass fibre reinforced plastic, and a plurality of insulating shields (3) which are arranged coaxially around the core or hollow core (2) and offset in the axial direction of the core or hollow core (2), with the steps:
a) positioning of a casting mould (4) in a predetermined axial position about the vertically arranged core or hollow core (2), the casting mould (4) having a coaxial opening (5) which is arranged in an area (6) of the casting mould (4) lying axially at the bottom, and a mould area (7) open at the top for forming an insulating shield (3);
b) production of a sealing connection (8) between the core or hollow core (2) and the casting mould (4) in an area (9) of the casting mould (4) lying axially at the bottom;
c) injection of a liquid plastic material, in particular a silicone material, at an increased pressure (pₑ) compared with the ambient pressure (p₀) in an axial area (10) of the casting mould (4) lying axially above the sealing connection (8) and axially below the upper end (11) of the casting mould (4) until the casting mould (4) is filled with a predetermined volume of the plastic material;
d) hardening of the plastic material in the casting mould (4);
e) termination of the sealing connection (8) between the core or hollow core (2) and the casting mould (4);
f) axial displacement of the casting mould (4) relative to the core or hollow core (2) in a downward direction by a predetermined displacement amount (s);
g) repetition of the steps b) to f) until the desired number of insulating shields (3) has been produced.

2. Method according to claim 1, **characterised in that** the injection of the plastic material according to step c) of claim 1 takes place with an injection pressure (pₑ) which is at least five times the ambient pressure (p₀).

3. Method according to claim 1 or 2, **characterised in that** the casting mould (4) is conditioned, in particular heated, at least during the step d) according to claim 1.

4. Method according to claim 3, **characterised in that** when silicone is used as the plastic material, the casting mould (4) is heated to at least 60°C.

5. Device for production of an electrical insulator (1) made of plastic by the method according to one or more of claims 1 to 4, which exhibits a casting mould (4) for production of insulating shields (3) which can be arranged concentrically about a vertically positioned core or hollow core (2) and exhibits an area (6) arranged axially at the bottom around the core or hollow core (2), and an area (7) arranged axially at the top and widening radially in relation to the area (6) lying axially at the bottom and matching the shape of the insulating shield (3) to be produced, **characterised in that** at least one injection channel (12) is arranged between the end (15) lying at the bottom of the area (6) lying axially at the bottom and the upper end (11) of the casting mould (4) for injection of liquid plastic material under pressure.

6. Device according to claim 5, **characterised in that** the injection channel (12) is arranged in an axial area (10) of the casting mould (4) in which the core or hollow core (2) makes close contact with the casting mould (4) in a coaxial opening (5) of the casting mould (4).

7. Device according to claim 5 or 6, **characterised in that** a plurality of injection channels (12), preferably four, six or eight injection channels (12), are arranged distributed uniformly over the circumference of the casting mould (4).

8. Device according to one of claims 5 to 7, **characterised in that** a seal (13) is arranged underneath the axial position (10) of the injection channel or injection channels (12) to seal the casting mould (4) to the core or hollow core (2).

9. Device according to claim 8, **characterised in that** the seal (13) can be controllably activated and deactivated.

10. Device according to claim 9, **characterised in that** the seal (13) can be activated, in particular inflated, pneumatically or hydraulically.

11. Device according to one of claims 5 to 10, **characterised in that** conditioning elements (14), in particular heating elements, are arranged in the mould area (7) of the casting mould (4) open at the top.

12. Device according to one of claims 5 to 11, **characterised in that** one or more additional temperature elements (16) are arranged above the casting mould (4).

## Revendications

1. Procédé de fabrication d'un isolateur électrique en matière plastique (1) présentant un noyau ou un noyau creux (2) central, notamment en plastique renforcé par fibres de verre, ainsi qu'une multitude de blindages isolants (3) disposés coaxialement autour du noyau ou du noyau creux (2), et décalés dans la direction axiale du noyau ou du noyau creux (2), et
**caractérisé par**
les étapes suivantes :
a) positionnement d'un moule (4) à une position axiale prédéfinie autour du noyau ou du noyau creux (2) vertical, le moule (4) ayant une ouverture coaxiale (5) dans une zone (6) inférieure axiale du moule (4), ainsi qu'une zone de moule (7) ouverte vers le haut pour former un blindage isolant (3),
b) fabrication d'une liaison étanche (8) entre le noyau ou le noyau creux (2) et le moule (4) dans une zone (9) inférieure axiale du moule (4),
c) injection d'une matière plastique liquide, notamment une matière silicone, avec une pression (pₑ) élevée par rapport à la pression ambiante (po) dans une zone axiale (10) du moule (4) située axialement au-dessus de la liaison étanche (8) et axialement en dessous de l'extrémité inférieure (11) du moule (4), jusqu'à ce que le moule (4) soit rempli d'un volume prédéfini de matière plastique,
d) durcissement de la matière plastique dans le moule (4),
e) soulèvement de la liaison étanche (8) entre le noyau ou le noyau creux (2) et le moule (4),
f) déplacement axial vers le bas du moule (4) par rapport au noyau ou au noyau creux (2) d'une trajectoire de déplacement (s) prédéfinie,
g) répétition des étapes b) à f), jusqu'à production du nombre souhaité de blindages isolants (3).

2. Procédé selon la revendication 1,
**caractérisé en ce que**
l'injection de la matière plastique selon l'étape c) de la revendication 1 est réalisée avec une pression d'injection (pₑ) correspondant au moins à 5 fois la pression ambiante (po).

3. Procédé selon la revendication 1 ou 2,
**caractérisé en ce que**
le moule (4) est tempéré, notamment chauffé, au moins pendant l'étape d) selon la revendication 1.

4. Procédé selon la revendication 3,
**caractérisé en ce que**
le moule (4) est chauffé au moins à 60°C en cas d'utilisation de silicone comme matière plastique.

5. Dispositif pour fabriquer un isolateur électrique en matière plastique (1) d'après le procédé selon l'une quelconque ou plusieurs des revendications 1 à 4, qui, pour fabriquer des blindages isolants (3), présente un moule (4) concentrique autour d'un noyau ou un noyau creux (2) vertical et une zone (6) inférieure axiale autour du noyau ou du noyau creux (2), et également une zone (7) supérieure axiale qui s'étend radialement par rapport à la zone (6) inférieure axiale et est adaptée au moule du blindage isolant (3) à fabriquer,
**caractérisé en ce qu'**
au moins un canal d'injection (12) pour l'injection sous pression de matière plastique liquide est disposé entre l'extrémité (15) située vers le bas de la zone (6) inférieure axiale, et l'extrémité (11) supérieure du moule (4).

6. Dispositif selon la revendication 5,
**caractérisé en ce que**
le canal d'injection (12) est disposé dans une zone (10) axiale du moule (4), dans laquelle le noyau ou le noyau creux (2) est situé dans une ouverture coaxiale (5) du moule (4) à proximité directe du moule (4).

7. Dispositif selon la revendication 5 ou 6,
**caractérisé en ce que**
plusieurs canaux d'injection (12), de préférence quatre, six ou huit canaux d'injection (12), sont répartis régulièrement sur le pourtour du moule (4).

8. Dispositif selon l'une quelconque des revendications 5 à 7,
**caractérisé en ce qu'**
un joint (13) destiné à étanchéifier le moule (4) par rapport au noyau ou au noyau creux (2) est disposé en dessous de la position axiale (10) du ou des canaux d'injection (12).

9. Dispositif selon la revendication 8,
**caractérisé en ce que**
le joint (13) peut être activé ou désactivé de manière commandée.

10. Dispositif selon la revendication 9,
**caractérisé en ce que**
le joint (13) peut être activé, notamment gonflé, pneumatiquement ou hydrauliquement.

11. Dispositif selon l'une quelconque des revendications 5 à 10,
**caractérisé en ce que**
des éléments de contrôle de la température (14), notamment des éléments de chauffage, sont disposés dans la zone de moule (7) ouverte vers le haut du moule (4).

12. Dispositif selon l'une quelconque des revendications 5 à 11,
**caractérisé en ce qu'**
un ou plusieurs élément(s) de température supplémentaire(s) (16) est/sont disposé(s) au-dessus du moule (4).
